# EUROPÄISCHE PATENTSCHRIFT

(11) **EP 3 104 954 B1**
(45) Veröffentlichungstag und Bekanntmachung des Hinweises auf die Patenterteilung: **24.06.2020**
(21) Anmeldenummer: 15726567.9
(22) Anmeldetag: 26.05.2015
(51) Int. Cl.: B01D 46/24, B01D 46/00

(54) **PATRONENFLANSCH UND FILTERANLAGE**
CARTRIDGE FLANGE AND FILTER SYSTEM
BRIDE DE CARTOUCHE ET DISPOSITIF FILTRANT

(30) Priorität: 02.06.2014 DE 202014102565 U; 02.06.2014 DE 102014107717
(43) Veröffentlichungstag der Anmeldung: 21.12.2016
(73) Patentinhaber: Ulmatec GmbH, 89275 Elchingen (DE)
(72) Erfinder: MOLL, Sebastian, 89129 Langenau (DE); EHRHARDT, Daniel, 89250 Senden (DE)
(74) Vertreter: Raunecker, Klaus Peter
(86) Internationale Anmeldenummer: PCT/EP2015/061543
(87) Internationale Veröffentlichungsnummer: WO 2015/185388

(56) Entgegenhaltungen:
- EP-A2- 1 772 179

## Beschreibung

Die Erfindung betrifft einen Patronenflansch zur Montage von Filterpatronen in Filteranlagen, insbesondere industriellen Absauganlagen oder Luftfiltereinrichtungen.

Die Erfindung betrifft auch eine Filteranlage nach dem Oberbegriff von Anspruch 14.

Derartige Patronenflansche sind üblicherweise Teil einer Filterpatrone, insbesondere für Absaug- bzw. Filteranlagen im industriellen oder gewerblichen Umfeld. Der Patronenflansch dient dabei dazu, eine Filterpatrone wechselbar mit einer übergeordneten Absaug- oder Filteranlage zu verbinden. Mit dem Patronenflansch verbunden ist üblicherweise ein oftmals zylindrisch ausgebildetes, gegebenenfalls gefaltetes Filtergewebe zur Aufnahme von Stäuben oder ähnlichem, welches nachfolgend als Filtereinheit bezeichnet wird.

Nach dem Stand der Technik existieren unterschiedlichste Filtersysteme, für welche jeweils entsprechend passende Filterpatronen und damit Patronenflansche vorgehalten werden müssen. Beschaffung und Bevorratung entsprechender Filterpatronen verursachen damit einen erheblichen logistischen Aufwand.

Die EP 1 772 179 A2 offenbart einen Befestigungsflansch für Filterkartuschen mit drei am Umfang des ringförmig ausgebildeten Flansches radial überstehenden Vorsprüngen mit jeweils einer in gleicher Umfangsrichtung randoffenen Ausnehmung zur Aufnahme eines Befestigungsbolzens. Um einen derartigen Befestigungsflansch mit mehr als nur einem Befestigungslochkreis verwenden zu können, wird in der EP 1 772 179 A2 vorgeschlagen, dass die Vorsprünge in der den randoffenen Ausnehmungen entgegengesetzten Umfangsrichtung jeweils eine weitere in Umfangsrichtung randoffene Ausnehmung aufweisen. Dabei sollen die in unterschiedliche Umfangsrichtungen weisenden Ausnehmungen unterschiedliche radiale Zentrumsabstände einnehmen.

Eine Aufgabe der Erfindung ist es, einen Patronenflansch bereitzustellen, welcher zum einen universell und zum anderen speziell für einen bestimmten Typ von Filteranlagen, insbesondere industriellen Absauganlagen oder Luftfiltereinrichtungen verwendet werden kann.

Diese Aufgabe wird gelöst durch einen Patronenflansch mit den Merkmalen des unabhängigen Anspruchs 1. Die Unteransprüche betreffen vorteilhafte Varianten und Ausführungsformen der Erfindung.

Eine weitere Aufgabe der Erfindung ist es eine Filteranlage zu schaffen, die mit einem Patronenflansch versehen ist, der zum einen universell und zum anderen speziell für einen bestimmten Typ von Filteranlagen, insbesondere industriellen Absauganlagen oder Luftfiltereinrichtungen verwendet werden kann.

Diese Aufgabe wird durch Anspruch 14 gelöst.

Ein erfindungsgemäßer Patronenflansch, insbesondere zur Montage einer Filterpatrone für Filteranlagen, insbesondere industrielle Absauganlagen oder Luftfiltereinrichtungen, weist eine ringförmige Grundform und mindestens eine am Außenumfang ausgebildete Lasche, mit mindestens einer Öffnung zur Aufnahme eines Bolzens zur Befestigung der Filterpatrone an der Filteranlage auf. Dabei ist die Lasche derart ausgebildet, dass Bolzen verschiedener Radialabstände von einem gedachten Mittelpunkt der ringförmigen Form des Patronenflansches zur endgültigen Befestigung des Patronenflansches eingreifen können.

Durch die erfindungsgemäße Lösung wird also sichergestellt, dass eine einzige Filterpatrone für Absaugsysteme verwendet werden kann, die unterschiedliche Abstände von Aufnahmebolzen zur Aufnahme von Filterpatronen von einem gedachten Mittelpunkt eines ringförmigen Patronenflansches aufweisen, sodass gegebenenfalls innerhalb eines Betriebes, in welchem unterschiedliche Absauganlagen zur Anwendung kommen lediglich eine Größe von Filterpatronen mit der entsprechenden erfindungsgemäßen Ausstattung vorgehalten werden muss.

Zusätzlich kann die Lasche eines erfindungsgemäßen Patronenflansches derart ausgebildet sein, dass ein Bolzen in Abhängigkeit der rotatorischen Orientierung des Patronenflansches eingreifen kann.

Durch diese Variante ergibt sich eine vergleichsweise einfache Montagemöglichkeit eines erfindungsgemäßen Patronenflansches in einer übergeordneten Anlage. Lediglich durch ein Verdrehen in eine bestimmte Richtung oder um einen bestimmten Winkelbereich kann entsprechend der geschilderten Variante erreicht werden, dass der Patronenflansch zuverlässig mit der Absaug- bzw. Filteranlage verbunden wird. Es werden also in Absaug- bzw. Filteranlagen mit unterschiedlichen Bolzenabständen identische Filterpatronen verbaut, die sich von Anlage zu Anlage lediglich in Hinblick auf ihre radiale Orientierung in Bezug auf die Gesamtanlage unterscheiden.

Bei dem erfindungsgemäßen Patronenflansches ist die mindestens eine Öffnung als Doppelschlüsselloch mit in verschiedenen Richtungen weisenden Bartseiten ausgebildet.

Als Doppelschlüsselloch ist hier eine Öffnung zu verstehen, welche durch eine Bohrung und sich daran anschließende Langlöcher, welche in verschiedene Richtungen weisen und versetzt zueinander ausgebildet sein können, gebildet ist. Dabei können in Fortführung der Analogie zu einem Schlüsselloch die sich an die Bohrung anschließenden Langlöcher als Bartseiten bezeichnet werden.

Durch die Ausbildung der Öffnung als Doppelschlüsselloch wird erreicht, dass der erfindungsgemäße Patronenflansch auf einfache Weise auf einen gegebenenfalls bereits mit einer Mutter versehenen Bolzen aufgesetzt und nachfolgend verdreht werden kann, sodass sich eine einfache Befestigungsmöglichkeit ergibt.

Erfindungsgemäß ist vorgesehen, dass die Bartseiten des Doppelschlüssellochs jeweils mittige Längsachsen aufweisen, welche verschiedene Abstandsradien zu einem gedachten Mittelpunkt des ringförmigen Patronenflansches zeigen. So kann ein erfindungsgemäßer Patronenflansch für verschiedene Filtereinheiten sowie als Spezialpatronenflansch, welcher nur auf bestimmte Filtereinheiten passt, verwendet werden.

Der Abstandsradius der mittigen Längsachse einer ersten Bartseite zu einem gedachten Mittelpunkt des ringförmigen Patronenflansches kann dabei im Bereich von 189,5 bis 192,5 mm liegen.

In einer bevorzugten Ausführungsform kann der Abstandsradius der ersten Bartseite 191 mm betragen.

Daneben kann die mittige Längsachse einer zweiten Bartseite bevorzugt einen Abstandsradius zu einem gedachten Mittelpunkt des ringförmigen Patronenflansches im Bereich von 194,5 bis 197,5 mm, insbesondere von 196 mm aufweisen.

Weiterhin weist ein erfindungsgemäßer Patronenflansch am Außenumfang bevorzugt drei Laschen auf, welche um 120° versetzt angeordnet sind. Zusätzlich können die Laschen vorteilhafterweise an ihren Kanten einen Aufsatz aufweisen, welcher dazu dient ein Verkanten oder Verklemmen beim Anziehen einer dem Bolzen zugehörigen Mutter zu verhindern.

Ebenfalls von Vorteil ist es, wenn der Flanschkörper des Patronenflansches eine Öffnung aufweist, durch welche, durch eine Filtereinheit gefilterte Luft abströmen kann.

Vorteilhafterweise zeigt der Flanschkörper bzw. der ringförmige Patronenflansch an seiner Unterseite eine Nut, welche zusätzlich ringförmige Rippen aufweist. Dadurch wird ein Kleber derart verteilt, dass eine formschlüssige Verbindung zwischen Patronenflansch und Filtereinheit hergestellt werden kann. Zusätzlich kann an einer weiteren, beidseitig verlaufenden Nut ein Dichtungsschaum aufgenommen werden, so dass sich eine beidseitige Dichtung ausbilden kann und somit eine beidseitige Montage des Patronenflansches mit zugehöriger Filtereinheit in einer Absaug- bzw. Filteranlage möglich ist.

Der Patronenflansch kann bevorzugt aus Kunststoff, insbesondere aus PA6, aus Leichtmetall, wie beispielsweise Aluminium, aus Edelstahl und/oder aus Stahl durch beispielsweise ein Spritzgussverfahren gebildet sein. Selbstverständlich sind auch weitere Fertigungsverfahren wie beispielsweise Gussverfahren, Aluminium-Druckgussverfahren und/oder Fräsen-Drehen denkbar.

Es versteht sich von selbst, dass die hier genannten Parameter besonders vorteilhafte Ausführungsformen betreffen und weitere Parameter, die von den bereits erwähnten abweichen, ebenfalls denkbar sind.

Die Laschen sind bevorzugt einstückig mit dem Patronenflansch ausgebildet.

Die ringförmige Grundform des Patronenflansches weist einen kreisförmigen Außenumfang auf, an dem die Laschen ausgebildet bzw. angebracht sein können.

Der erfindungsgemäße Patronenflansch eignet sich in besonderer Weise zur Montage von Filterpatronen in industriellen Absauganlagen oder Luftfiltereinrichtungen.

Die Erfindung betrifft ferner eine Filteranlage, insbesondere eine industrielle Absauganlage oder eine Luftfiltereinrichtung, mit Aufnahmemittel zur Befestigung einer Filterpatrone und mit einem Patronenflansch mit einer ringförmigen Grundform und mindestens einer am Außenumfang bzw. an der Außenseite des Patronenflansches ausgebildeten Lasche. Die Lasche weist mindestens eine Öffnung zur Aufnahme eines der beispielsweise als Bolzen ausgebildeten Aufnahmemittel auf. Dabei kann die Lasche derart ausgebildet sein, dass Bolzen, die verschiedene Radialabstände von einem gedachten Mittelpunkt der ringförmigen Grundform des Patronenflansches aufweisen, zur endgültigen Befestigung des Patronenflansches in die Öffnung eingreifen können.

Vorteilhafte Ausführungsformen und Weiterbildungen für die Filteranlage ergeben sich aus den abhängigen Ansprüchen 2 bis 14 zum Patronenflansch sowie analog aus der vorstehenden und nachfolgenden Beschreibung des Patronenflansches.

Die Erfindung wird anhand der nachfolgenden Zeichnung näher erläutert.

Es zeigt:
- Figur 1: eine schematische Darstellung einer Draufsicht auf die der Filtereinheit abgewandten Seite eines erfindungsgemäßen Patronenflansches (Oberseite);
- Figur 2: eine schematische Darstellung einer Draufsicht auf die der Filtereinheit zugewandten Seite eines erfindungsgemäßen Patronenflansches (Unterseite); und
- Figur 3: eine schematische Ausschnittsdarstellung einer Filteranlage.

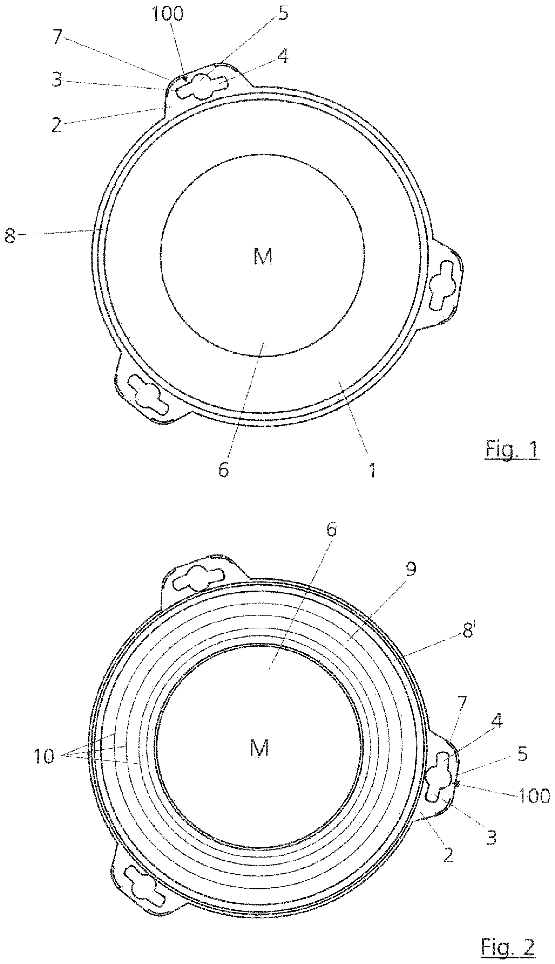

In Figur 1 ist schematisch eine Draufsicht auf die der Filtereinheit abgewandten Seite, im Folgenden als Vorderseite bezeichnet, eines erfindungsgemäßen Patronenflansches dargestellt. Der erfindungsgemäße Patronenflansch weist eine ringförmige, vorzugsweise kreisringförmige, Grundform auf, welche im Folgenden als Flanschkörper 1 bezeichnet wird, an deren Außenumfang mindestens eine Lasche 2 angebracht ist.

Der erfindungsgemäße Patronenflansch weist einen Flanschkörper 1 auf, welcher kreisringförmig ausgebildet ist und einen Durchmesser im Bereich von 359 bis 369 mm, insbesondere von 364 mm aufweist. Im gezeigten Beispiel befinden sich an der Außenseite bzw. am Außenumfang des Flanschkörpers 1 drei um 120° versetzte Laschen 2. Die drei Laschen 2 weisen jeweils ein Doppelschlüsselloch 100 mit zwei Bartseiten 3 und 4 auf, wobei diese sich gegenüber liegen und versetzt zueinander angeordnet sind. Weiterhin weisen die Bartseiten 3 und 4 im vorliegenden Beispiel einen Radius im Bereich von 1,5 bis 11,5 mm, insbesondere von 6,5 mm, auf. Selbstverständlich sind auch weitere Radien denkbar. Die Bohrung 5 des Doppelschlüssellochs 100 dient zur Aufnahme von Bolzen, welche dazu dienen einen mit dem Patronenflansch verbundenen Filter mit einer übergeordneten Absauganlage zu verbinden. Die Bohrung 5 weist im vorliegenden Ausführungsbeispiel einen Durchmesser im Bereich von 8,5 bis 14,5 mm, insbesondere von 11,5 mm, auf. Selbstverständlich sind auch weitere Durchmesser denkbar. Weiterhin weisen die Laschen 2 jeweils an Ihren Ecken Aufsätze auf, welche als Abstandshalter dienen und ein Verkanten und Verklemmen bei der Montage verhindern.

Eine der Bartseiten 3 oder 4 ist auf einen ersten Umfangsdurchmesser angeordnet und die andere Bartseite 4 oder 3 ist auf einen zweiten Umfangsdurchmesser angeordnet. Die Bartseite mit dem kleineren Umfangsdurchmesser, hier die Bartseite 4, liegt auf einem Umfangsdurchmesser im Bereich von 379 bis 385 mm, insbesondere von 382 mm. Selbstverständlich sind auch andere Umfangsdurchmesser denkbar. Die Bartseite mit dem größeren Umfangsdurchmesser, hier Bartseite 3, welche auf einem Umfangsdurchmesser im Bereich von 389 bis 395 mm, insbesondere von 392 mm, liegt, korrespondiert mit Filtereinheiten Dritter. Die Bartseite 3, kann auch als Universal-Bartseite des Doppelschlüssellochs angesehen werden, was bedeutet, dass diese Bartseite mit beliebigen Filtereinheiten korrespondieren kann. Die Bartseiten 3 und 4 sind im gezeigten Beispiel mittig mit einer Bohrung 5 verbunden und bilden somit das Doppelschlüsselloch 100. Durch die Bohrung 5 kann ein Aufnahmebolzen bei der Montage zunächst eingeführt werden, wonach der Patronenflansch durch eine Drehung um einen gewissen Winkelbereich und mittels einer dem Bolzen zugehörigen Mutter fixiert werden kann.

Weiterhin weist der erfindungsgemäße Patronenflansch im vorliegenden Beispiel eine Öffnung 6 auf, durch welche, die durch einen Filter durchtretende, gereinigte Luft in Richtung eines Abluftkanals geführt werden kann. Ebenfalls gut zu erkennen in Figur 1 ist die umlaufende Nut 8, welche dazu dient einen Dichtungsschaum aufzunehmen, um eine Abdichtung zwischen Patronenflansch mit zugehöriger Filtereinheit und Einbaustelle in einer Absaug- bzw. Filteranlage herzustellen. Diese Nut ist auch auf der Unterseite, das heißt auf der der Filtereinheit zugewandten Seite, eines erfindungsgemäßen Patronenflansches ausgebildet, so dass dieser unabhängig von seiner Orientierung montiert werden kann.

In Figur 2 ist eine Ausführungsform eines erfindungsgemäßen Patronenflansches von der der Filtereinheit zugewandten Seite (von unten) schematisch dargestellt. Der erfindungsgemäße Patronenflansch weist an seiner Unterseite, zu der auf der Oberseite korrespondierenden Nut 8, eine Nut 8' auf, in welche ein Dichtungsschaum eingebracht werden kann. Eine weitere umlaufende Nut 9 weist umlaufende ringförmige Rippen 10 auf, durch welche das Fließverhalten des Klebers verbessert wird und die somit zur Verbesserung der Haftung des Filtervlieses am Patronenflansch dienen.

Der Aufsatz 7 auf den Laschen 2 ist auch auf der Unterseite des Patronenflansches deutlich zu erkennen. Die weiteren Bezugsziffern sind analog den in Figur 1 gewählten Bezugsziffern.

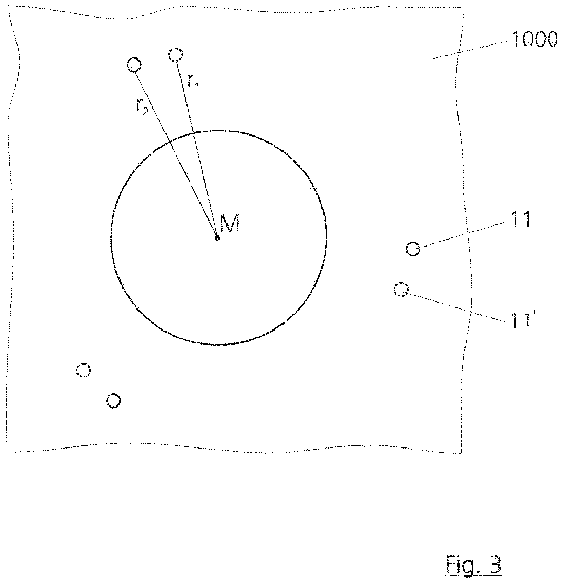

Figur 3 zeigt schematisch einen Ausschnitt einer Filteranlage 1000, mit Aufnahmemitteln 11 und 11', welche in der vorliegenden Ausführungsform als Bolzen 11 bzw. 11' ausgebildet sind. Die Bolzen 11, 11' dienen dabei zur Befestigung einer Filterpatrone mit einem erfindungsgemäßen Patronenflansch, welcher eine ringförmige Grundform und mindestens eine am Außenumfang bzw. an der Außenseite ausgebildete Lasche 2 aufweist, an der Filteranlage 1000. Die mindestens eine Lasche 2 weist eine Öffnung zur Aufnahme eines Bolzens 11 bzw. 11' auf. In Figur 3 sind zwei alternative Positionierungen der Bolzen 11, 11' zu einem gedachten Mittelpunkt M dargestellt. Der Bolzen 11 weist einen Abstand r₂ von einem gedachten Mittelpunkt M auf. Der Bolzen 11' weist einen Abstand r₁ von einem gedachten Mittelpunkt M auf. Die in der Figur 3 gezeigten möglichen Positionen der Bolzen 11 und 11' sind lediglich beispielhaft, weitere Positionen sind denkbar.

Eine konkrete Filteranlage wird im Regelfall zur Aufnahme einer Filterpatrone nur Aufnahmemittel bzw. Bolzen zur Montage einer Filterpatrone aufweisen deren Radialabstände von einem gedachten Mittelpunkt des Patronenflansches identisch sind. Die strichlinierte Darstellung des Bolzen 11' in Figur 3 soll lediglich die mögliche Positionierung von Bolzen bei einer weiteren Filteranlage und somit die universelle bzw. allgemeine Verwendung des erfindungsgemäßen Patronenflansches zeigen.

Eine Filterpatrone mit einem erfindungsgemäßen Patronenflansch kann beispielsweise sowohl an den Bolzen 11 oder alternativ an den Bolzen 11' positioniert bzw. befestigt werden. Eine endgültige Befestigung der Filterpatrone mit einem erfindungsgemäßen Patronenflansch an einer Filteranlage mit Bolzen erfolgt anschließend vorzugsweise über Befestigungsmittel (hier nicht dargestellt), welche beispielsweise als Muttern ausgebildet sein können. Es versteht sich von selbst, dass auch alternative Befestigungsmittel verwendet werden können.

## Patentansprüche

1. Patronenflansch zur Montage von Filterpatronen in Filteranlagen (1000), insbesondere industriellen Absauganlagen oder Luftfiltereinrichtungen, mit einer ringförmigen Grundform und mindestens einer am Außenumfang ausgebildeten Lasche (2), welche mindestens eine Öffnung (100) zur Aufnahme eines Bolzens (11, 11') zur Befestigung der Filterpatrone an der Filteranlage (1000) aufweist, wobei
die Lasche (2) derart ausgebildet ist, dass Bolzen (11, 11') mit verschiedenen Radialabständen (r₁, r₂) von einem gedachten Mittelpunkt (M) der ringförmigen Grundform des Patronenflansches zur endgültigen Befestigung des Patronenflansches eingreifen können,
**dadurch gekennzeichnet, dass** die mindestens eine Öffnung als Doppelschlüsselloch (100) mit in verschiedenen Richtungen weisenden Bartseiten (3, 4) ausgebildet ist, wobei die Bartseiten (3, 4) des Doppelschlüssellochs (100) jeweils mittige Längsachsen aufweisen, welche verschiedene Abstandsradien zu einem gedachten Mittelpunkt (M) des ringförmigen Patronenflansches zeigen.

2. Patronenflansch nach Anspruch 1,
**d**a**durch gekennzeichnet**, dass die Lasche (2) derart ausgebildet ist, dass Bolzen (11, 11') verschiedener Radialabstände (r₁, r₂) in Abhängigkeit der rotatorischen Orientierung des Patronenflansches eingreifen können.

3. Patronenflansch nach Anspruch 1 und 2,
**d**a**durch gekennzeichnet**, dass die mittige Längsachse einer ersten Bartseite (3, 4) einen Abstandsradius zu einem gedachten Mittelpunkt (M) des ringförmigen Patronenflansches im Bereich von 189,5 bis 192,5 mm aufweist.

4. Patronenflansch nach Anspruch 1,24 und 3,
**d**a**durch gekennzeichnet**, dass die mittige Längsachse der ersten Bartseite (3, 4) einen Abstandsradius von 191 mm aufweist.

5. Patronenflansch nach Anspruch 1,
**d**a**durch gekennzeichnet**, dass die mittige Längsachse einer zweiten Bartseite (3, 4) einen Abstandsradius zu einem gedachten Mittelpunkt (M) des ringförmigen Patronenflansches im Bereich von 194,5 bis 197,5 mm aufweist.

6. Patronenflansch nach Anspruch 1 und 5,
**d**a**durch gekennzeichnet**, dass die mittige Längsachse der zweiten Bartseite (3, 4) einen Abstandsradius zu einem gedachten Mittelpunkt (M) des ringförmigen Patronenflansches von 196 mm aufweist.

7. Patronenflansch nach einem der vorangegangenen Ansprüche,
**dadurch gekennzeichnet, dass** drei Laschen (2) am Außenumfang um 120° versetzt angeordnet sind.

8. Patronenflansch nach einem der vorangegangenen Ansprüche,
**dadurch gekennzeichnet, dass** die Laschen (2) an ihren Kanten einen Aufsatz (7) aufweisen.

9. Patronenflansch nach einem der vorangegangenen Ansprüche,
**dadurch gekennzeichnet, dass** an seiner Unterseite eine Nut (9) ausgebildet ist.

10. Patronenflansch nach einem der vorangegangenen Ansprüche,
**dadurch gekennzeichnet, dass** innerhalb der Nut (9) umlaufende ringförmige Rippen (10) angeordnet sind.

11. Patronenflansch nach einem der vorangegangenen Ansprüche,
**dadurch gekennzeichnet, dass** beidseitig verlaufende Nuten (8, 8') ausgebildet sind.

12. Patronenflansch nach einem der vorangegangenen Ansprüche,
**dadurch gekennzeichnet, dass** dieser aus einem Kunststoff, Leichtmetall, Stahl, insbesondere einem Edelstahl, gebildet ist.

13. Patronenflansch nach einem der vorangegangenen Ansprüche 1-13,
**dadurch gekennzeichnet, dass** der Patronenflansch aus dem Kunststoff PA6 gebildet ist.

14. Filteranlage (1000) mit einer Filterpatrone und mit einem Patronenflansch nach einem der Ansprüche 1 bis 13.

## Claims

1. Cartridge flange for fitting filter cartridges in filter systems (1000), in particular industrial suction-extraction systems or air-filter systems, having an annular basic shape and at least one lug (2) which is configured on the external circumference and which has at least one opening (100) for receiving a bolt (11, 11') for fastening the filter cartridge to the filter system (1000), wherein
the lug (2) is configured in such a manner that bolts (11, 11') having dissimilar radial spacings (r1, r2) from an imaginary centre (M) of the annular basic shape of the cartridge flange may engage for final fastening of the cartridge flange,
**characterized in that**
the at least one opening is configured as a double keyhole (100) having bit sides (3, 4) which point in dissimilar directions, wherein
the bit sides (3, 4) of the double keyhole (100) each have centrical longitudinal axes which display dissimilar spacing radii in relation to an imaginary centre (M) of the annular cartridge flange.

2. Cartridge flange according to Claim 1, **characterized in that**
the lug (2) is configured in such a manner that bolts (11, 11') of dissimilar radial spacings (r1, r2) may engage depending on the rotational orientation of the cartridge flange.

3. Cartridge flange according to Claims 1 and 2, **characterized in that**
the centrical longitudinal axis of a first bit side (3, 4) has a spacing radius in relation to an imaginary centre (M) of the annular cartridge flange in the range from 189.5 to 192.5 mm.

4. Cartridge flange according to Claims 1,24 and 3, **characterized in that**
the centrical longitudinal axis of the first bit side (3, 4) has a spacing radius of 191 mm.

5. Cartridge flange according to Claim 1, **characterized in that**
the centrical longitudinal axis of a second bit side (3, 4) has a spacing radius in relation to an imaginary centre (M) of the annular cartridge flange in the range from 194.5 to 197.5 mm.

6. Cartridge flange according to Claims 1 and 5, **characterized in that**
the centrical longitudinal axis of the second bit side (3, 4) has a spacing radius in relation to an imaginary centre (M) of the annular cartridge flange of 196 mm.

7. Cartridge flange according to one of the preceding claims,
**characterized in that**
three lugs (2) are disposed so as to be offset by 120° on the external circumference.

8. Cartridge flange according to one of the preceding claims,
**characterized in that**
the lugs (2) on the edges thereof have an attachment (7).

9. Cartridge flange according to one of the preceding claims,
**characterized in that**
a groove (9) is configured on the lower side of said cartridge flange.

10. Cartridge flange according to one of the preceding claims,
**characterized in that**
encircling annular ribs (10) are disposed within the groove (9).

11. Cartridge flange according to one of the preceding claims,
**characterized in that**
grooves (8, 8') which run on either side are configured.

12. Cartridge flange according to one of the preceding claims,
**characterized in that**
said cartridge flange is formed from a plastics material, light metal, steel, in particular a stainless steel.

13. Cartridge flange according to one of the preceding Claims 1-13,
**characterized in that**
the cartridge flange is formed from the PA6 plastics material.

14. Filter system (1000) having a filter cartridge and having a cartridge flange according to one of Claims 1 to 13.

## Revendications

1. Bride de cartouche destinée au montage de cartouches filtrantes dans des systèmes filtrants (1000), en particulier des systèmes d'aspirations industriels ou des dispositifs de filtration d'air, dotée d'une forme de base annulaire et d'au moins une patte (2) réalisée sur le pourtour extérieur, laquelle comporte au moins une ouverture (100) destinée à accueillir un boulon (11, 11') afin de fixer la cartouche filtrante au système filtrant (1000), dans laquelle
la patte (2) est réalisée de telle sorte que des boulons (11, 11') avec différentes distances radiales (r1, r2) par rapport à un point médian imaginaire (M) de la forme de base annulaire de la bride de cartouche peuvent entrer en prise pour la fixation définitive de la bride de cartouche,
**caractérisée en ce que**
l'au moins une ouverture est réalisée comme trou de clavette double (100) avec des côtés de barbe (3, 4) orientés dans différentes directions, dans laquelle les côtés de barbe (3, 4) du trou de clavette double (100) comportent respectivement des axes longitudinaux médians, lesquels présentent différents rayons d'écart par rapport à un point médian imaginaire (M) de la bride de cartouche annulaire.

2. Bride de cartouche selon la revendication 1, **caractérisée en ce que**
la patte (2) est réalisée de telle sorte que des boulons (11, 11') avec différentes distances radiales (r1, r2) peuvent entrer en prise en fonction de l'orientation rotatoire de la bride de cartouche.

3. Bride de cartouche selon la revendication 1 et 2, **caractérisée en ce que**
l'axe longitudinal médian d'un premier côté de barbe (3, 4) comporte un rayon d'écart par rapport à un point médian imaginaire (M) de la bride de cartouche annulaire dans un intervalle de 189,5 à 192,5 mm.

4. Bride de cartouche selon la revendication 1,24 et 3, **caractérisée en ce que**
l'axe longitudinal médian du premier côté de barbe (3, 4) comporte un rayon d'écart de 191 mm.

5. Bride de cartouche selon la revendication 1, **caractérisée en ce que**
l'axe longitudinal médian d'un deuxième côté de barbe (3, 4) comporte un rayon d'écart par rapport à un point médian imaginaire (M) de la bride de cartouche annulaire dans un intervalle de 194,5 à 197,5 mm.

6. Bride de cartouche selon la revendication 1 et 5, **caractérisée en ce que**
l'axe longitudinal médian du deuxième côté de barbe (3, 4) comporte un rayon d'écart par rapport à un point médian imaginaire (M) de la bride de cartouche annulaire de 196 mm.

7. Bride de cartouche l'une des revendications précédentes,
**caractérisée en ce que**
trois pattes (2) sont agencées sur le pourtour extérieur décalées de 120°.

8. Bride de cartouche l'une des revendications précédentes,
**caractérisée en ce que**
les pattes (2) comportent un embout (7) sur leurs bords.

9. Bride de cartouche l'une des revendications précédentes,
**caractérisée en ce que**
une rainure (9) est réalisée sur sa face inférieure.

10. Bride de cartouche l'une des revendications précédentes,
**caractérisée en ce que**
des nervures (10) annulaires périphériques sont agencées à l'intérieur de la rainure (9).

11. Bride de cartouche l'une des revendications précédentes,
**caractérisée en ce que**
des rainures (8, 8') s'étendant des deux côtés sont réalisées.

12. Bride de cartouche l'une des revendications précédentes,
**caractérisée en ce que**
celle-ci est faite d'un plastique, métal léger, acier, en particulier d'un acier inoxydable.

13. Bride de cartouche l'une des revendications précédentes 1-13,
**caractérisée en ce que**
la bride de cartouche est faite du plastique PA6.

14. Système filtrant (1000) doté d'une cartouche filtrante et d'une bride de cartouche selon l'une des revendications 1 à 13.
